# EUROPÄISCHE PATENTSCHRIFT

(11) **EP 3 708 523 B1**
(45) Veröffentlichungstag und Bekanntmachung des Hinweises auf die Patenterteilung: **06.09.2023**
(21) Anmeldenummer: 20163164.5
(22) Anmeldetag: 13.03.2020
(51) Int. Cl.: B65G 47/86

(54) **PASSIVE KLAMMERVORRICHTUNG, EINTEILIGE PASSIVE KLAMMER UND BEHÄLTERBEHANDLUNGSVORRICHTUNG**
PASSIVE CLAMP DEVICE, ONE-PIECE PASSIVE CLAMP AND CONTAINER HANDLING APPARATUS
DISPOSITIF DE SERRAGE PASSIF, PINCE PASSIVE D'UN SEUL TENANT ET DISPOSITIF DE MANIPULATION DE RÉCIPIENTS

(30) Priorität: 13.03.2019 DE 102019106377
(43) Veröffentlichungstag der Anmeldung: 16.09.2020
(73) Patentinhaber: KRONES AG, 93073 Neutraubling (DE)
(72) Erfinder: Gloetzl, Reiner, 93073 Neutraubling (DE); Landler, Bruno, 93073 Neutraubling (DE)
(74) Vertreter: Nordmeyer, Philipp Werner

(56) Entgegenhaltungen:
- DE-A1-102012 011 367
- DE-B3-102012 015 886
- US-B1- 8 672 376

## Beschreibung

### Technisches Gebiet

Die vorliegende Erfindung betrifft eine passive Klammervorrichtung sowie eine einteilige passive Klammer zum Halten eines Behälters in einer Behälterbehandlungsvorrichtung, insbesondere bevorzugt zum Halten eines Getränkebehälters an einem Halsabschnitt, und eine entsprechend ausgebildete Behälterbehandlungsvorrichtung.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise aktive Klammervorrichtungen, bei welchen ein Öffnen und Schließen der jeweiligen Halteabschnitte der Klammervorrichtung mittels eines Aktuators aktiv durchgeführt wird, bekannt. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Solche aktiven Klammervorrichtungen setzen sich aus einer Vielzahl von Einzelteilen, beispielsweise Klammerarmen, Buchsen, Aktuatoren, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf. Zudem sind zum aktiven Öffnen und Schließen der aktiven Klammervorrichtung entsprechende das Öffnen und Schließen steuernde Teile an einer aktiven Klammervorrichtungen aufweisenden Behandlungsvorrichtung vorzusehen.

Fernerhin bekannt sind passive Klammerverrichtungen, welche lediglich durch das Einschieben des jeweiligen Behälters in die Klammervorrichtung mit dem Behälter versehen werden und dann den Behälter halten. Die Klammerarme weisen dabei eine feste Position auf. Zum Greifen eines Behälters muss dieser in die Klammer gedrückt werden. Dabei werden die Klammerarme durch den Behälter nach außen gespreizt, so dass der Behälter gegen die aufgrund des Spreizens der Klammerarme entstehende Schließkraft der Klammerarme bewegt werden muss. Die Klammerarme sind derart ausgebildet, dass ein eingeschobener Behälter durch die Klammerarme in einer im Wesentlichen festen Position gehalten wird. Zum Entnehmen des Behälters aus der Klammervorrichtung ist dieser wieder aus der Klammer herauszuziehen.

Bei einem kontinuierlichen Einschieben des Behälters in die Klammer erfolgt somit zuerst ein Aufspreizen der Klammerarme, da diese durch den Behälter verdrängt werden. Um dieses Aufspreizen zu ermöglichen, ist es bekannt, die Klammerarme elastisch auszubilden. Eine derartige Klammervorrichtung ist beispielsweise aus der DE 195 13 221 A1 oder der DE 10 2005 002 715 A1 bekannt. Bei derartigen Klammervorrichtungen ist durch die Federwirkung der Klammerarme ebenfalls das Gewicht des Behälters aufzunehmen.

Um zu verhindern, dass sich die elastischen Klammerarme nach einem Einschieben wieder ungewollt aufspreizen, ist es bekannt, die Klammerarme mittels eines Verriegelungselements in der geschlossenen Position zu halten, wie in der WO 2014/026747 A1 gezeigt.

Ferner sind passive Klammervorrichtungen bekannt, bei welchen ein Vorspannelement die Klammerarme in einer vorgegebenen Position, in der Regel der geschlossenen Position, vorspannt. Derartige Vorspannelemente sind beispielsweise durch spiralförmig geformte Druckfedern oder durch in der Klammervorrichtung vorgesehenen Magneten ausgebildet. Eine Klammervorrichtung mit letztgenannter Ausbildung ist beispielsweise der DE 10 2017 116 921 A1 zu entnehmen.

Die DE 10 2012 011 367 A1 offenbart eine passive Klammervorrichtung nach dem Oberbegriff des Anspruchs 1. Die US 8,672,376 B1 beschreibt eine aktiv betätigbare Greifeinrichtung.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, bevorzugt zum Halten eines Getränkebehälters an einem Halsabschnitt, bereitzustellen.

Die Aufgabe wird durch eine passive Klammervorrichtung zum Halten eines Behälters in einer Behälterbehandlungsvorrichtung, bevorzugt zum Halten eines Getränkebehälters an einem Halsabschnitt mit den Merkmalen des Anspruchs 1 gelöst. Vorteilhafte Weiterbildungen ergeben sich aus den Unteransprüchen, der Beschreibung und den Figuren.

Entsprechend wird eine passive Klammervorrichtung zum Halten eines Behälters in einer Behälterbehandlungsvorrichtung, bevorzugt zum Halten eines Getränkebehälters an einem Halsabschnitt, vorgeschlagen, umfassend einen um eine erste Schwenkachse an einem Klammerträger schwenkbar angeordneten ersten Klammerarm mit einem Halteabschnitt zur Anlage an den zu haltenden Behälter, einen um eine zweite Schwenkachse am Klammerträger schwenkbar angeordneten zweiten Klammerarm mit einem Halteabschnitt zur Anlage an den zu haltenden Behälter, und ein Vorspannelement zum Vorspannen der Klammerarme in eine geschlossene Position, wobei die Klammerarme dazu eingerichtet und ausgebildet sind, zum Aufnehmen eines Behälters passiv durch ein Einschieben des Behälters geöffnet zu werden. Erfindungsgemäß ist ein Verriegelungselement zum Verriegeln der Klammerarme in der geschlossene Position vorgesehen, wobei das Verriegelungselement zwischen einer Verriegelungsstellung und einer entriegelten Stellung bewegbar ist und über ein elastisches Federelement in die Verriegelungsstellung oder die entriegelte Stellung vorgespannt ist, wobei sich die Klammerarme, das Verriegelungselement und das Federelement im Wesentlichen in einer senkrecht zu den Schwenkachsen liegenden Ebene erstrecken.

Dadurch, dass ein Verriegelungselement zum Verriegeln der Klammerarme in der geschlossene Position vorgesehen ist, wobei das Verriegelungselement zwischen einer Verriegelungsstellung und einer entriegelten Stellung bewegbar ist und über ein elastisches Federelement in die Verriegelungsstellung oder die entriegelte Stellung vorgespannt ist, wobei sich die Klammerarme, das Verriegelungselement und das Federelement im Wesentlichen in einer senkrecht zu den Schwenkachsen liegenden Ebene erstrecken, kann sichergestellt werden, dass die über das Vorspannelement in der geschlossenen Position vorgespannten Klammerarme nicht ungewollt entgegen der Vorspannung des Vorspannelements geöffnet werden, sondern dies aufgrund der Verriegelung durch das Verriegelungselement nur möglich ist, wenn das Verriegelungselement aktiv aus der Verriegelungsstellung bewegt wird. Mithin kann die Sicherheit des Haltens des Behälters erhöht werden.

Ferner kann durch das Vorsehen der Klammerarme, des Verriegelungselements und des Federelements im Wesentlichen in der senkrecht zu den Schwenkachsen liegenden Ebene ein benötigter Bauraum der passiven Klammervorrichtung insbesondere in Richtung der Schwenkachsen, mithin senkrecht zur Ebene, im Vergleich zu herkömmlichen Klammervorrichtungen mit Verriegelungselement signifikant verringert werden. Selbiges gilt für den Materialbedarf einer derartigen passiven Klammervorrichtung. Dieser ist im Vergleich zu herkömmlichen Klammervorrichtungen mit Verriegelungselement ebenfalls verringert, da kein Material vorzusehen ist, dass mehrfach dreidimensional umgebogen werden muss, um das Verriegelungselement in die richtige Position elastisch verschiebbar zu positionieren.

Weiterhin kann dadurch der bei herkömmlichen Klammervorrichtungen vorliegende Nachteil, dass bei entriegelten Klammerarmen, mithin wenn sich das Verriegelungselement in der entriegelten Stellung befindet, keine Vorspannkraft durch die Klammerarme ausgeübt werden kann, da deren Gegenlager fehlt, überwunden werden. Durch die vorbeschriebene Ausbildung der passiven Klammervorrichtung kann eine Vorspannkraft beziehungsweise Schließkraft im Gegensatz dazu bereitgestellt werden, wenn das Verriegelungselement nicht in der Verriegelungsstellung vorliegt. Ferner kann dadurch verhindert werden, dass die Klammerarme durch eine elastische Verformung den Behälter freigeben, wenn sich das Verriegelungselement in der Verriegelungsstellung befindet. Insbesondere kann die Vorspannung auch bei einem Defekt oder Bruch des Verriegelungselements oder des Federelements weiterhin bereitgestellt werden.

Durch das Ausbilden des Vorspannelements im Wesentlichen in der Ebene senkrecht zu den Schwenkachsen können fernerhin die Hygieneeigenschaften der passiven Klammervorrichtung gegenüber herkömmlichen Klammervorrichtungen verbessert werden, da dadurch keine sich in Richtung der Schwenkachsen erstreckenden Strukturen vorhanden sind, an welchen sich Partikel leicht absetzen und dadurch zu Verunreinigungen führen können.

Um einen besonders einfachen Aufbau mit besonders vorteilhaften Hygieneeigenschaften der passiven Klammervorrichtung zu erzielen, ist das Federelement an dem Vorspannelement angeordnet, wobei das Federelement bevorzugt einstückig mit dem Vorspannelement ausgebildet ist.

Gemäß einer bevorzugten weiteren Ausführungsform sind das Federelement und das Verriegelungselement einstückig ausgebildet. Dadurch können abermals die Hygieneeigenschaften der passiven Klammervorrichtung verbessert werden. Zwischen dem Federelement und dem Verriegelungselement sind mithin keine Verbindungsspalte und Verbindungsflächen vorzusehen.

Wenn das Federelement eine Blattfeder ist, kann die Klammervorrichtung im Vergleich zu herkömmlichen Klammervorrichtungen verbesserte Hygieneeigenschaften aufweisen. Im Gegensatz zu herkömmlichen Vorspannelementen, beispielsweise eine spiralförmige Druckfeder oder eine dreidimensional mehrfach senkrecht zu den Schwenkachsen gebogener Federbügel, weist die Blattfeder keinerlei Spalte auf, in welchen sich Partikel absetzen können und so die Klammervorrichtung verunreinigen. Ferner sind keine Magnete notwendig, sodass sich entsprechend auch kein metallischer Abrieb an den Magneten ablagern kann, welcher nicht durch normales Abschwallen entfernbar ist. Weiterhin kann dadurch ein Zusammenbau der Klammervorrichtung im Vergleich zu herkömmlichen Klammervorrichtungen vereinfacht sein.

Bevorzugt sind das Verriegelungselement und/oder das Federelement bezogen auf eine Klammermittelachse mittig angeordnet. Dadurch kann eine im Wesentlichen symmetrische Kraftverteilung in der passiven Klammervorrichtung erzielt werden.

Gemäß einer weiteren bevorzugten Ausführungsform sind das Vorspannelement und die Klammerarme einstückig ausgebildet, wobei bevorzugt das Vorspannelement, die Klammerarme und das Federelement einstückig ausgebildet sind, wobei besonders bevorzugt das Vorspannelement, die Klammerarme, das Federelement und das Verriegelungselement einstückig ausgebildet sind. Durch die einteilige Ausführung kann eine besonders hygienische Konstruktion erzielt werden, da beispielsweise keine Spalte durch ansonsten vorzusehende Lagerbuchsen oder zur Anbindung beispielsweise zwischen dem Vorspannelement und den Klammerarmen entstehen.

Bevorzugt sind die Klammerarme, das Vorspannelement, das Federelement und/oder das Verriegelungselement als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet.

Gemäß einer weiteren bevorzugten Ausführungsform ist das Vorspannelement ein sich in der senkrecht zu den Schwenkachsen liegenden Ebene erstreckender elastischer Federbügel. Dadurch kann die Klammervorrichtung im Vergleich zu herkömmlichen Klammervorrichtungen verbesserte Hygieneeigenschaften aufweisen. Im Gegensatz zu herkömmlichen Vorspannelementen, wie beispielsweise eine spiralförmige Druckfeder, weist der elastische Federbügel keinerlei Spalte auf, in welchen sich Partikel absetzen können und so die Klammervorrichtung verunreinigen. Ferner sind keine Magnete notwendig, sodass sich entsprechend auch kein metallischer Abrieb an den Magneten ablagern kann, welcher nicht durch normales Abschwallen entfernbar ist. Weiterhin kann dadurch ein Zusammenbau der Klammervorrichtung im Vergleich zu herkömmlichen Klammervorrichtungen vereinfacht sein. Zudem kann dadurch der für das Vorspannelement vorzusehende Bauraum im Vergleich zu herkömmlichen Klammervorrichtungen reduziert sein.

Bevorzugt weisen die Klammerarme jeweils einen sich von der jeweiligen Schwenkachse auf der den Halteabschnitten gegenüberliegenden Seite erstreckenden Verbindungsabschnitt auf, wobei an einem der Schwenkachse gegenüberliegenden Ende des Verbindungsabschnitts ein Ende des Vorspannelements angeordnet ist, wobei sich das Vorspannelement bevorzugt mittig zwischen den Verbindungsabschnitten erstreckt, wobei sich das Vorspannelement bevorzugt von den Enden der Verbindungsabschnitte in Richtung der Schwenkachsen erstreckt. Dadurch kann ein besonders kompakter und einfacher Aufbau der passiven Klammervorrichtung bereitgestellt werden.

Um bei einem kompakten Aufbau des Vorspannelements eine erhöhte Elastizität bereitstellen zu können, kann das Vorspannelement eine Mehrzahl von Krümmungswechseln jeweils um eine Krümmungsachse parallel zu den Schwenkachsen aufweisen. Mithin kann das Vorspannelement eine zweidimensionale Wellenform aufweisen. Durch diese Ausbildung des Vorspannelements kann zum einen der sich nach hinten erstreckende Bauraum des Vorspannelements im Vergleich zu einem Bauraum beispielsweise mit einem Vorspannelement, welches lediglich eine Krümmung mit entsprechend größerem Krümmungsradius aufweist, verkleinert sein. Zudem verlängert sich entsprechend der Anzahl von Krümmungswechseln eine Gesamtlänge und/oder erhöht sich eine Elastizität beziehungsweise Biegeweichheit des Vorspannelements, insbesondere, wenn das Vorspannelement in Form eines Federbügels ausgebildet ist.

Gemäß einer weiteren bevorzugten Ausdrucksform ist das Vorspannelement bezüglich der Schwenkachsen auf einer den Halteabschnitten entgegengesetzten Seite der der Klammerarme angeordnet, und/oder ist das Federelement bezüglich der Schwenkachsen auf einer den Halteabschnitten entgegengesetzten Seite der der Klammerarme angeordnet, und/oder ist das Verriegelungselement bezüglich der Schwenkachsen auf einer den Halteabschnitten entgegengesetzten Seite der der Klammerarme angeordnet. Durch diese Anordnung müssen die Klammerarme beispielsweise nicht, wie bei herkömmlichen passiven Klammervorrichtungen oftmals der Fall, zusätzlich zur Aufnahme der Gewichtskraft des zu haltenden Behälters, welche im Bereich der Haltearme durch die Klammerarme aufgenommen und im Bereich der Schwenkachsen an den Klammerträger übertragen wird, weiterhin eine Federwirkung bereitzustellen, welche die Elastizität beziehungsweise die Beweglichkeit der Klammerarme ermöglicht. Mit anderen Worten kann dadurch eine Entkopplung zwischen dem Bereitzustellen der Federwirkung und dem Aufnehmen der Gewichtskraft des durch die Klammervorrichtung gehaltenen Behälters erzielt werden. Dies mag die Standzeit der Klammervorrichtung im Vergleich zu herkömmlichen Klammervorrichtungen, bei welchen die Klammerarme sowohl die Federwirkung bereitzustellen als auch die Gewichtskraft aufnehmen, erhöhen. Zudem ermöglicht dies eine größere Varianz hinsichtlich der Form der Klammerarme und/oder der Mündung der Klammervorrichtung, durch welche ein aufzunehmender Behälter eingeschoben wird, da das Vorspannelement und/oder das Verriegelungselement und/oder das Federelement nun auf der gegenüberliegenden Seite bezogen auf die Schwenkachsen, mithin den Lager- und Drehpunkten der Klammerarme, vorgesehen sind.

Um auf einfache Weise bereitstellen zu können, dass das Verriegelungselement die Klammerarme in der Verriegelungsstellung zuverlässig verriegelt, können die Klammerarme jeweils einen Anschlag aufweisen, an welchen das Verriegelungselement in der Verriegelungsstellung anschlägt.

Gemäß einer weiteren bevorzugten Ausführungsform ist das Verriegelungselement in einer Richtung parallel zu den Schwenkachsen bewegbar, wobei bevorzugt das Verriegelungselement durch eine Führung zwischen der Verriegelungsstellung und der entriegelten Stellung geführt ist. Dadurch kann die passive Klammervorrichtung besonders kompakt aufgebaut sein, insbesondere in Breitenrichtung, welche einer Richtung quer zur Klammermittelachse senkrecht zu den Schwenkachsen entspricht, da kein Raum für die Bewegung des Verriegelungselements in Breitenrichtung vorzusehen ist.

Wenn das Verriegelungselement einen Stützabschnitt zum Abstützen gegen den Klammerträger und/oder einen Träger einer die Klammervorrichtung aufweisenden Behälterbehandlungsvorrichtung aufweist, wobei der Stützabschnitt bevorzugt elastisch ausgebildet ist, kann über den Stützabschnitt sichergestellt werden, dass das Verriegelungselement sich stets in der vorgesehenen Verriegelungsstellung befindet beziehungsweise durch das Federelement in die vorgesehene Position vorgespannt ist. Eine Bewegung des Verriegelungselements aus der Verriegelungsstellung heraus ist dabei bevorzugt nur gegen einen Widerstand des Stützabschnitts möglich. Bevorzugt ist der Stützabschnitt elastisch zu verformen.

Gemäß einer weiteren bevorzugten Ausdrucksform weist das Verriegelungselement einen Anschlagabschnitt zum Anschlagen an die Klammerarme, bevorzugt an Anschläge der Klammerarme, auf, wobei bevorzugt der Anschlagabschnitt versetzt zu einem Steuerabschnitt des Verriegelungselement angeordnet ist, wobei der Anschlagabschnitt und der Steuerabschnitt bevorzugt in einem vorgegebenen Abstand versetzt zueinander angeordnet sind, bevorzugt in Richtung der Klammermittelachse versetzt zueinander angeordnet sind. Dadurch kann die passive Klammervorrichtung einen besonders kompakten Aufbau aufweisen. Die Betätigung des Verriegelungselements über den Steuerabschnitt kann somit in einem Bereich angeordnet sein, welche einen anderen Abstand zu den Schwenkachsen aufweist, als der Anschlagabschnitt. Dadurch ist es möglich, anstelle einer Anordnung von Anschlagabschnitt und Steuerabschnitt bei gleichem Abstand von den Schwenkachsen übereinander parallel zu den Schwenkachsen, wie dies bei herkömmlichen Klammervorrichtungen der Fall ist, eine Anordnung vorzusehen, bei welcher sich der Anschlagabschnitt und der Steuerabschnitt im Wesentlichen in der Ebene senkrecht zu den Schwenkachsen versetzt zueinander erstrecken.

Die oben gestellte Aufgabe wird weiterhin durch eine einteilige passive Klammer mit den nachstehend beschriebenen Merkmalen gelöst. Diese einteilige passive Klammer ist nicht Teil der Erfindung.

Die einteilige passive Klammer zum Halten eines Behälters in einer Behälterbehandlungsvorrichtung, bevorzugt zum Halten eines Getränkebehälters an einem Halsabschnitt, vorgeschlagen, umfasst einen um eine erste Schwenkachse schwenkbaren ersten Klammerarm mit einem Halteabschnitt zur Anlage an den zu haltenden Behälter, einen um eine zweite Schwenkachse schwenkbaren zweiten Klammerarm mit einem Halteabschnitt zur Anlage an den zu haltenden Behälter, und ein einstückig mit den Klammerarmen ausgebildetes Vorspannelement zum Vorspannen der Klammerarme in eine geschlossene Position, wobei die Klammerarme dazu eingerichtet und ausgebildet sind, zum Aufnehmen eines Behälters passiv durch ein Einschieben des Behälters geöffnet zu werden. Die einteilige passive Klammer kennzeichnet sich ferner dadurch, dass ein Verriegelungselement zum Verriegeln der Klammerarme in der geschlossene Position vorgesehen ist, wobei das Verriegelungselement zwischen einer Verriegelungsstellung und einer entriegelten Stellung bewegbar ist und über ein elastisches Federelement in die Verriegelungsstellung oder die entriegelte Stellung vorgespannt ist, wobei sich die Klammerarme, das Verriegelungselement und das Federelement im Wesentlichen in einer senkrecht zu den Schwenkachsen liegenden Ebene erstrecken.

Die hinsichtlich der passiven Klammervorrichtung beschriebenen Vorteile und Wirkungen können analog durch die einteilige passive Klammer erzielt werden.

Die passive Klammer kann eine oder mehrere der hinsichtlich der passiven Klammervorrichtung beschriebenen bevorzugten Ausführungen und Ausgestaltungen der Klammerarme, des Verriegelungselements, des elastischen Federelements und/oder des Vorspannelements gemäß weiterer bevorzugter Ausführungsformen aufweisen. Das heißt, alle zu den vorgenannten Teilen in Bezug auf die Klammervorrichtung genannten Merkmale treffen auch für die einteilige passive Klammer zu.

Die oben gestellte Aufgabe wird weiterhin durch eine Behälterbehandlungsvorrichtung mit den Merkmalen des Anspruchs 12 gelöst. Vorteilhafte Weiterbildungen ergeben sich aus der vorliegenden Beschreibung und den Figuren.

Entsprechend wird eine Behälterbehandlungsvorrichtung vorgeschlagen, welche einen Träger umfasst. Die Behälterbehandlungsvorrichtung kennzeichnet sich dadurch, dass an den Träger eine passive Klammervorrichtung gemäß einem der vorstehenden Ausführungsformen angeordnet ist. Die hinsichtlich der passiven Klammervorrichtung sowie der einteiligen passiven Klammer beschriebenen Vorteile und Wirkungen können analog durch die Behälterbehandlungsvorrichtung erzielt werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer passiven Klammervorrichtung zum Halten eines Behälters;
- Figur 2: schematisch eine perspektivische Detailansicht der passiven Klammervorrichtung aus Figur 1;
- Figur 3: schematisch eine perspektivische Seitenansicht eines Ausschnitts einer Behälterbehandlungsvorrichtung mit einer passiven Klammervorrichtung gemäß den Figuren 1 und 2; und
- Figur 4: schematisch eine Seitenansicht eines Teilbereichs der Behälterbehandlungsvorrichtung aus Figur 3.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

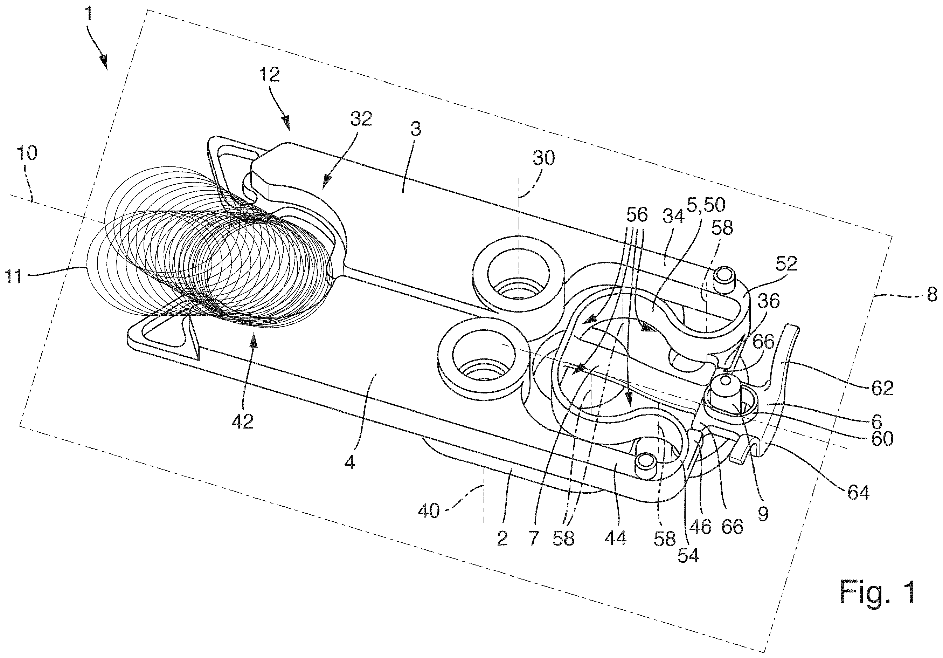

In Figur 1 ist schematisch Figur 1 schematisch eine perspektivische Seitenansicht einer passiven Klammervorrichtung 1 zum Halten eines Behälters gezeigt. Die passive Klammervorrichtung 1 umfasst einen um eine erste Schwenkachse 30 an einem Klammerträger 2 schwenkbar angeordneten ersten Klammerarm 3 mit einem Halteabschnitt 32 zur Anlage an den zu haltenden Behälter, einen um eine zweite Schwenkachse 40 am Klammerträger 2 schwenkbar angeordneten zweiten Klammerarm 4 mit einem Halteabschnitt 42 zur Anlage an den zu haltenden Behälter, und ein Vorspannelement 5 zum Vorspannen der Klammerarme 3, 4 in eine geschlossene Position, welcher der Position entspricht, wie sie in Figur 1 gezeigt ist. Die Klammerarme 3, 4 sind dazu eingerichtet und ausgebildet, zum Aufnehmen eines Behälters passiv durch ein Einschieben des Behälters geöffnet zu werden. Mittels des Bezugszeichens 11 ist eine Kontur des aufzunehmenden Behälters in einer senkrecht zu den Schwenkachsen liegenden Ebene 8 gezeigt. Wie deutlich zu erkennen, ist der Durchmesser des Behälters 11 größer als die engste Stelle an der Vorderseite der Klammervorrichtung 1. Unter "Vorderseite" wird hier die Seite der Klammervorrichtung 1 verstanden, welche in Bezug auf eine Klammermittelachse 10 in Richtung des aufzunehmenden Behälters weist. Mithin entspricht die Vorderseite einer Behälteraufnahmeseite. Mit anderen Worten ist die Vorderseite jene Seite, auf welcher sich die Halteabschnitte 32, 42 bezogen auf eine durch die Schwenkachsen 30, 40 gebildeten Ebene erstrecken.

Die passive Klammervorrichtung 1 weist ferner ein Verriegelungselement 6 zum Verriegeln der Klammerarme 3, 4 in der geschlossenen Position auf, wobei das Verriegelungselement 6 zwischen einer Verriegelungsstellung, wie in Figur 1 gezeigt, und einer entriegelten Stellung bewegbar ist. In der entriegelten Stellung ist das Verriegelungselement 6 im Vergleich zu der in Figur 1 gezeigten Verriegelungsstellung im Wesentlichen parallel zu den Schwenkachsen nach oben verschoben. Unter "oben" wird hier eine Orientierung entgegen der Richtung der Gravitationskraft verstanden, wobei sich letztgenannte parallel zu den Schwenkachsen erstreckt.

Das Verriegelungselement 6 ist über ein elastisches Federelement 7 in die Verriegelungsstellung oder die entriegelte Stellung vorgespannt, vorliegend in die Verriegelungsstellung.

Die Klammerarme 3, 4, das Verriegelungselement 6, das Vorspannelement 5 und das Federelement 7 erstrecken sich im Wesentlichen in der senkrecht zu den Schwenkachsen 30, 40 liegenden Ebene 8.

Das Vorspannelement 5 ist vorliegend ein sich in der senkrecht zu den Schwenkachsen 30, 40 liegenden Ebene 8 erstreckender elastischer Federbügel 50.

Die Klammerarme 3, 4 weisen jeweils einen sich von der jeweiligen Schwenkachse 30, 40 auf der den Halteabschnitten 32, 42 gegenüberliegenden Seite erstreckenden Verbindungsabschnitt 34, 44 auf, wobei an einem der jeweiligen Schwenkachse 30, 40 gegenüberliegenden Ende des Verbindungsabschnitts 34, 44 ein Ende 52, 54 des Vorspannelements 5 angeordnet ist. Hierbei erstreckt sich das Vorspannelement 5 mittig zwischen den Verbindungsabschnitten 34, 44, wobei sich das Vorspannelement 5 von den Enden der Verbindungsabschnitte 34, 44 in Richtung der Schwenkachsen 30, 40 erstreckt.

Wie aus Figur 1 deutlich zu erkennen, weisen die Klammerarme 3, 4 bezogen auf die Schwenkachsen 30, 40 auf der Seite der Halteabschnitte 32, 42, sowie in den Verbindungsabschnitten 34, 44 eine Breite senkrecht zur Klammermittelachse 10 in der Ebene 8 auf, welche signifikant größer ist, als eine Breite des Vorspannelements 5 bzw. des Federbügels 50. Die Klammerarme 3, 4 sind dadurch im Vergleich zum Vorspannelement 5 starr, insbesondere biegesteif ausgebildet. Mithin wird die Elastizität, welche ein Schwenken der Klammerarme 3, 4 um die jeweilige Schwenkachse 30, 40 ermöglicht, im Wesentlichen ausschließlich über das Vorspannelement 5 bereitgestellt.

Um die Elastizität des Federbügels 50 weiter zu erhöhen, weist dieser eine Mehrzahl von Krümmungswechseln 56 jeweils um eine Krümmungsachse 58 parallel zu den Schwenkachsen 30, 40 auf.

Das Vorspannelement 5, das Federelement 7 und das Verriegelungselement 6 sind bezüglich der Schwenkachsen 30, 40 auf einer den Halteabschnitten 32, 42 entgegengesetzten Seite der Klammerarme 3, 4 angeordnet.

Ferner sind das Federelement 7, welches vorliegend optional in Form einer Blattfeder ausgebildet ist, und das Verriegelungselement 6 bezogen auf die Klammermittelachse 10 mittig angeordnet.

Wie aus Figur 1 zu erkennen, sind das Vorspannelement 5, die Klammerarme 3, 4, das Federelement 7 und das Verriegelungselement 6 einstückig ausgebildet, vorliegend optional als 3D-Druck-Teil.

Mithin ist eine einteilige passive Klammer 12 zum Halten eines Behälters in einer Behälterbehandlungsvorrichtung, vorliegend zum Halten eines Getränkebehälters an einem Halsabschnitt, bereitgestellt, welche einen um eine erste Schwenkachse 30 schwenkbaren ersten Klammerarm 3 mit einem Halteabschnitt 32 zur Anlage an den zu haltenden Behälter 11, einen um eine zweite Schwenkachse 40 schwenkbaren zweiten Klammerarm 4 mit einem Halteabschnitt 42 zur Anlage an den zu haltenden Behälter 11, und ein einstückig mit den Klammerarmen 3, 4 ausgebildetes Vorspannelement 5 zum Vorspannen der Klammerarme 3, 4 in eine geschlossene Position, wobei die Klammerarme 3, 4 dazu eingerichtet und ausgebildet sind, zum Aufnehmen eines Behälters 11 passiv durch ein Einschieben des Behälters 11 geöffnet zu werden, wobei ein Verriegelungselement 6 zum Verriegeln der Klammerarme 3, 4 in der geschlossene Position vorgesehen ist, wobei das Verriegelungselement 6 zwischen einer Verriegelungsstellung und einer entriegelten Stellung bewegbar ist und über ein elastisches Federelement 7 in die Verriegelungsstellung oder die entriegelte Stellung vorgespannt ist, vorliegend in die Verriegelungsstellung, wobei sich die Klammerarme 3, 4, das Verriegelungselement 6 und das Federelement 7 im Wesentlichen in einer senkrecht zu den Schwenkachsen 30, 40 liegenden Ebene 8 erstrecken. Zudem erstreckt sich auch das Vorspannelement 5 im Wesentlichen in der senkrecht zu den Schwenkachsen 30, 40 liegenden Ebene 8.

Die Klammerarme 3, 4 weisen jeweils einen Anschlag 36, 46 auf, an welchen das Verriegelungselement 6 via eines Anschlagabschnitt 66 in der Verriegelungsstellung anschlägt.

Das Verriegelungselement 6 ist ferner in einer Richtung parallel zu den Schwenkachsen 30, 40 bewegbar, wobei es durch eine Führung 9 zwischen der Verriegelungsstellung und der entriegelten Stellung geführt ist. Die Führung 9 ist vorliegend in Form eines Führungsstiftes, welcher kraftschlüssig in dem Klammerträger 2 angeordnet ist, bereitgestellt. Die Führung 9 kommuniziert mit einem Führungsabschnitt 60 des Verriegelungselements 6, welches als ein sich in Richtung der Klammermittelachse 10 erstreckendes Langloch ausgebildet ist. Die Form des Langlochs ist erforderlich, da das Verriegelungselement 6 bei einem Bewegen zwischen der Verriegelungsstellung und der entriegelten Stellung aufgrund der starren Anordnung an dem Vorspannelement 5, sowie einer Formänderung des Vorspannelements 5 bei einer elastischen Verformung einen Versatz in Richtung der Klammermittelachse 10 erfährt.

Alternativ kann auch das Verriegelungselement 6 einen Führungsabschnitt 60 in Form eines Stiftes aufweisen, welcher dann in einer als Langloch ausgebildeten Führung 9 im Klammerträger 2 ausgebildet ist.

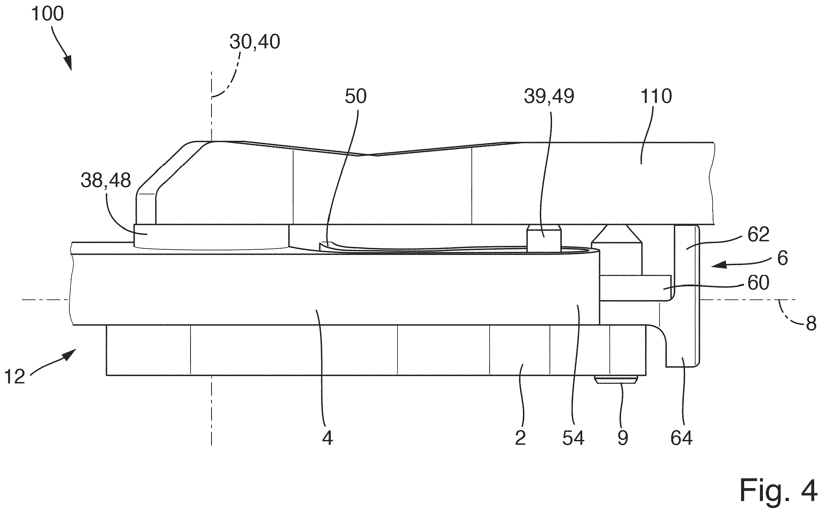

Wie später in Hinblick auf Figur 4 näher beschrieben, weist das Verriegelungselement 6 zwei Stützabschnitte 62 zum Abstützen gegen einen Träger einer die passive Klammervorrichtung 1 aufweisenden Behälterbehandlungsvorrichtung auf, wobei die Stützabschnitte 62 elastisch ausgebildet sind.

Das Verriegelungselement 6 weist ferner einen Steuerabschnitt 64 auf, welche vorliegend die Form einer Steuernocke aufweist.

Der Steuerabschnitt 64 und die Stützabschnitte 62 erstrecken sich in einem Abstand zu den Schwenkachsen 30, 40, bzw. einer durch die Schwenkachsen 30, 40 gebildeten Ebene, welcher größer ist, als ein Abstand zwischen dem Anschlagabschnitt 66 und den Schwenkachsen 30, 40. Mithin sind der Steuerabschnitt 64 und optional ebenso die Stützabschnitt 62 in einem vorgegebenen Abstand versetzt zu dem Anschlagabschnitt 66 angeordnet, vorliegend in Richtung der Klammermittelachse 11 versetzt zueinander.

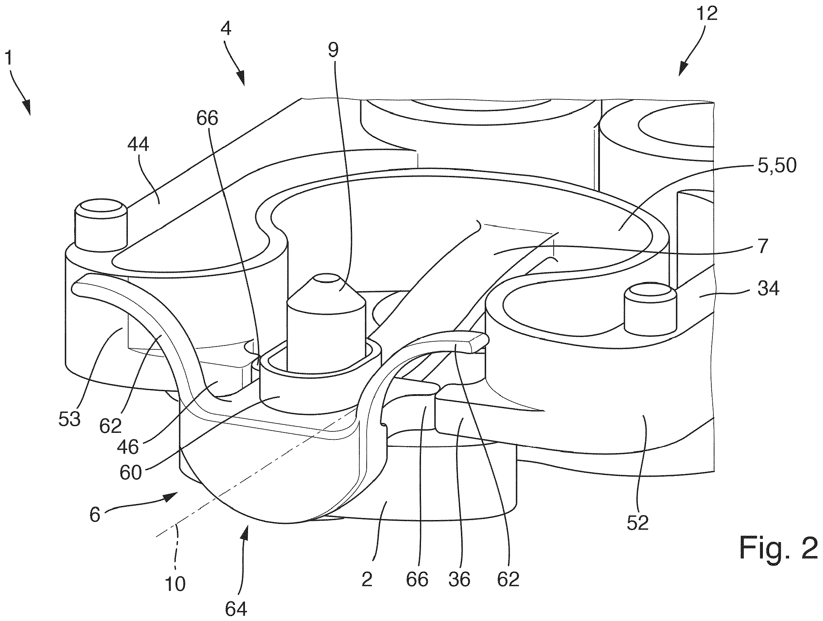

Figur 2 zeigt schematisch eine perspektivische Detailansicht der passiven Klammervorrichtung 1 aus Figur 1, aus welcher die vorgeschriebenen Anordnungen insbesondere des Verriegelungselements 6 und des Vorspannelements 5 in Form des Federbügels 50 im Detail zu entnehmen sind.

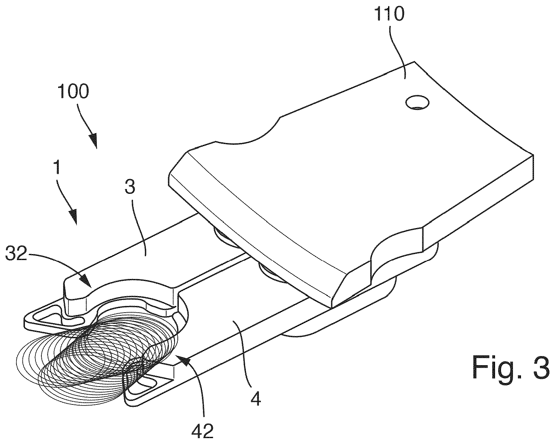

In Figur 3 ist schematisch eine perspektivische Seitenansicht eines Ausschnitts einer Behälterbehandlungsvorrichtung 100 mit einer passiven Klammervorrichtung 1 gemäß den Figuren 1 und 2 gezeigt. Die Behälterbehandlungsvorrichtung 100 weist dabei eine Vielzahl von um eine Drehachse an einem Träger 110 angeordneten Klammervorrichtungen 1 auf, wobei hier beispielhaft ein Ausschnitt des Trägers 110 mit einer Klammervorrichtung 1 gezeigt ist.

Die Klammervorrichtung 1 ist an einer Unterseite des Trägers 110 angeordnet, wobei der Träger 110 den Bereich der Klammervorrichtung 1 in Bezug auf die Schwenkachsen 30, 40 gegenüber der Halteabschnitte 32, 42, sowie den Bereich der Schwenkachsen 30,40 bedeckt. Dadurch ist erzielt, dass der abgedeckte Bereich der Klammervorrichtung 1 im Wesentlichen von Kontakt mit Flüssigkeit, die bei einem Behandlungsprozess in der Behälterbehandlungsvorrichtung 100 in Richtung der Klammervorrichtung 1 spritzt, nicht in Kontakt mit den abgedeckten Bereichen kommen kann. Mithin weist die Behälterbehandlungsrichtung 101 besonders hohe Hygieneeigenschaften auf. Ferner weisen die Klammerarme 3, 4 von der Klammermittelachse 10 zu den Seiten senkrecht zur Klammermittelachse 10 hin abfallende Oberseiten auf, sodass Flüssigkeit, die auf einen der Klammerarme 3, 4 trifft, seitlich abschließen kann.

Figur 4 zeigt schematisch eine Seitenansicht eines Teilbereichs der Behälterbehandlungsvorrichtung 100 aus Figur 3. Die Klammerarme 3, 4 weisen jeweils um die Schwenkachsen 30, 40 Lagerbuchsen auf, die sich in Richtung der Schwenkachsen 30, 40 nach oben über die Klammerarme 3, 4 erstrecken und so Abstützsegmente 38, 48 zum Abstützen gegen den Träger 110 ausbilden. Ferner weisen die Klammerarme 3, 4 an den Enden der Verbindungsabschnitte 34, 44 weitere Abstützsegmente 39, 49 auf, sodass ein Winkelspiel der Klammerarme 3, 4 aus der Ebene 8 heraus minimiert ist.

Deutlich zu erkennen ist ferner, dass das Verriegelungselement 6 mit den Stützabschnitten 62 am Träger 110 anliegt. Hierbei kann das elastische Federelement 7 optional derart ausgebildet sein, sodass das Verriegelungselement 6 via der Stützabschnitte 62 gegen den Träger 110 gedrückt wird, ohne aber Verriegelungsstellung zu verlassen. Mithin ist das Verriegelungselement 6 über die Vorspannung des elastischen Federelements 7 in die Verriegelungsstellung vorgespannt.

Zum Entriegeln der Klammerarme 3, 4 interagiert der Steuerabschnitt 64 mit einer nicht gezeigten Steuerkurve der der Behandlungsvorrichtung 100, wobei die Steuerkurve derart ausgebildet ist, dass das Verriegelungselement 6 über den Steuerabschnitt 64 nach oben auf den Träger 110 zu bewegt wird, wobei dabei die Stützabschnitte 62 elastisch verformt werden. Ein seitliches Ausbrechen des Verriegelungselements 6 ist dabei durch die Führung 9 verhindert.

Gemäß einer Alternative kann das Verriegelungselement 6 auch mit seiner Unterseite an dem Kammerträger 2 abgestützt sein, wobei diese Stellung bevorzugt die Verriegelungsstellung darstellt. Das Federelement 7 kann dabei das Verriegelungselement 6 gegen den Kammerträger 2 drücken beziehungsweise vorspannen, so dass wiederum das Verriegelungselement 6 durch das elastische Federelement 7 in die Verriegelungsstellung vorgespannt ist. Optional können auch die Stützabschnitte 62 in der Verriegelungsstellung des Verriegelungselements 6 eine Vorspannung aufweisen und so zum Vorspannen des Verriegelungselements 6 in die Verriegelungsstellung beitragen.

Alternativ kann der Träger 110 auch die Funktion des Klammerträgers 2 übernehmen. Mit anderen Worten kann die einteilige passive Klammer 12 über Verbindungsbolzen auch direkt an den Träger 110 schwenkbar angebracht werden.

Zu erkennen ist hier nochmals deutlich, dass der Steuerabschnitt 64 und die Stützabschnitte 62 einen Abstand zu den Schwenkachsen 30, 40 aufweisen, als der Anschlagabschnitt 66, welcher hier durch das Ende 54 des zweiten Klammerarms 4 verdeckt ist.

Fernerhin ist zu entnehmen, dass sich die Klammerarme 3, 4, das Federelement 7, das Vorspannelement 5 in Form des Federbügels 50 und das Verriegelungselement 6 im Wesentlichen in der Ebene 8 erstrecken. Unterhalb des Klammerträgers 2 weist die Klammervorrichtung 1 im Wesentlichen keine Teile mehr auf.

### Bezugszeichenliste

- 1: Klammervorrichtung

- 2: Klammerträger

- 3: Ersten Klammerarm
- 30: Erste Schwenkachse
- 32: Halteabschnitt
- 34: Verbindungsabschnitt
- 36: Anschlag
- 38: Abstützsegment
- 39: Abstützsegment

- 4: Zweiter Klammerarm
- 40: Zweite Schwenkachse
- 42: Halteabschnitt
- 44: Verbindungsabschnitt
- 46: Anschlag
- 48: Abstützsegment
- 49: Abstützsegment

- 5: Vorspannelement
- 50: Elastischer Federbügel
- 52: Erstes Ende
- 54: Zweites Ende
- 56: Krümmungswechseln
- 58: Krümmungsachse

- 6: Verriegelungselement
- 60: Führungsabschnitt
- 62: Stützabschnitt
- 64: Steuerabschnitt
- 66: Anschlagabschnitt

- 7: Elastisches Federelement
- 8: Ebene

- 9: Führung

- 10: Klammermittelachse

- 11: Behälter

- 12: Passive Klammer

- 100: Behandlungsvorrichtung

- 110: Träger

## Patentansprüche

1. Passive Klammervorrichtung (1) zum Halten eines Behälters (11) in einer Behälterbehandlungsvorrichtung (100), bevorzugt zum Halten eines Getränkebehälters an einem Halsabschnitt, umfassend einen um eine erste Schwenkachse (30) an einem Klammerträger (2) schwenkbar angeordneten ersten Klammerarm (3) mit einem Halteabschnitt (32) zur Anlage an den zu haltenden Behälter (11), einen um eine zweite Schwenkachse (40) am Klammerträger (2) schwenkbar angeordneten zweiten Klammerarm (4) mit einem Halteabschnitt (42) zur Anlage an den zu haltenden Behälter (11), und ein Vorspannelement (5) zum Vorspannen der Klammerarme (3, 4) in eine geschlossene Position, wobei die Klammerarme (3, 4) dazu eingerichtet und ausgebildet sind, zum Aufnehmen eines Behälters (11) passiv durch ein Einschieben des Behälters geöffnet zu werden, wobei
ein Verriegelungselement (6) zum Verriegeln der Klammerarme (3, 4) in der geschlossenen Position vorgesehen ist, wobei das Verriegelungselement (6) zwischen einer Verriegelungsstellung und einer entriegelten Stellung bewegbar ist und über ein elastisches Federelement (7) in die Verriegelungsstellung oder die entriegelte Stellung vorgespannt ist,
**dadurch gekennzeichnet, dass**
sich die Klammerarme (3, 4), das Verriegelungselement (6) und
das Federelement (7) im Wesentlichen in einer senkrecht zu den Schwenkachsen (30, 40) liegenden Ebene (8) erstrecken, und dass
das Federelement (7) an dem Vorspannelement (5) angeordnet ist.

2. Passive Klammervorrichtung (1) gemäß Anspruch 1, **dadurch gekennzeichnet, dass** das Federelement (7) und das Verriegelungselement (6) einstückig ausgebildet sind, und/oder das Federelement (7) eine Blattfeder ist, und/oder das Verriegelungselement (6) und/oder das Federelement (7) bezogen auf eine Klammermittelachse (10) mittig angeordnet sind.

3. Passive Klammervorrichtung (1) gemäß Anspruch 1 oder 2, **dadurch gekennzeichnet, dass** das Federelement (7) einstückig mit dem Vorspannelement (5) ausgebildet ist.

4. Passive Klammervorrichtung (1) gemäß einem der vorstehenden Ansprüche, **dadurch gekennzeichnet, dass** das Vorspannelement (5) und die Klammerarme (3, 4) einstückig ausgebildet sind, wobei bevorzugt das Vorspannelement (5), die Klammerarme (3, 4) und das Federelement (7) einstückig ausgebildet sind, wobei besonders bevorzugt das Vorspannelement (5), die Klammerarme (3, 4), das Federelement (7) und das Verriegelungselement (6) einstückig ausgebildet sind, wobei die Klammerarme (3, 4), das Vorspannelement (5), das Federelement (7) und/oder das Verriegelungselement (6) als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet ist.

5. Passive Klammervorrichtung (1) gemäß einem der vorstehenden Ansprüche, **dadurch gekennzeichnet, dass** das Vorspannelement (5) ein sich in der senkrecht zu den Schwenkachsen (30, 40) liegenden Ebene (8) erstreckender elastischer Federbügel (50) ist, wobei bevorzugt die Klammerarme (3, 4) jeweils einen sich von der jeweiligen Schwenkachse (30, 40) auf der den Halteabschnitten (32, 42) gegenüberliegenden Seite erstreckenden Verbindungsabschnitt (34, 44) aufweisen, wobei an einem der Schwenkachse (30, 40) gegenüberliegenden Ende des Verbindungsabschnitts (34, 44) ein Ende (52, 54) des Vorspannelements (5) angeordnet ist, wobei sich das Vorspannelement (5) bevorzugt mittig zwischen den Verbindungsabschnitten (34, 44) erstreckt, wobei sich das Vorspannelement (5) bevorzugt von den Enden der Verbindungsabschnitte (34, 44) in Richtung der Schwenkachsen (30, 40) erstreckt.

6. Passive Klammervorrichtung (1) gemäß einem der vorstehenden Ansprüche, **dadurch gekennzeichnet, dass** das Vorspannelement (5) eine Mehrzahl von Krümmungswechseln (56) jeweils um eine Krümmungsachse (58) parallel zu den Schwenkachsen (30, 40) aufweist.

7. Passive Klammervorrichtung (1) gemäß einem der vorstehenden Ansprüche, **dadurch gekennzeichnet, dass** das Vorspannelement (5) bezüglich der Schwenkachsen (30, 40) auf einer den Halteabschnitten (32, 42) entgegengesetzten Seite der der Klammerarme (3, 4) angeordnet ist, und/oder das Federelement (7) bezüglich der Schwenkachsen (30, 40) auf einer den Halteabschnitten (32, 42) entgegengesetzten Seite der der Klammerarme (3, 4) angeordnet ist, und/oder das Verriegelungselement (6) bezüglich der Schwenkachsen (30, 40) auf einer den Halteabschnitten (32. 42) entgegengesetzten Seite der der Klammerarme (3, 4) angeordnet ist.

8. Passive Klammervorrichtung (1) gemäß einem der vorstehenden Ansprüche, **dadurch gekennzeichnet, dass** die Klammerarme (3, 4) jeweils einen Anschlag (36, 46) aufweisen, an welchen das Verriegelungselement (6) in der Verriegelungsstellung anschlägt.

9. Passive Klammervorrichtung (1) gemäß einem der vorstehenden Ansprüche, **dadurch gekennzeichnet, dass** das Verriegelungselement (6) in einer Richtung parallel zu den Schwenkachsen (30, 40) bewegbar ist, wobei bevorzugt das Verriegelungselement (6) durch eine Führung (9) zwischen der Verriegelungsstellung und der entriegelten Stellung geführt ist.

10. Passive Klammervorrichtung (1) gemäß einem der vorstehenden Ansprüche, **dadurch gekennzeichnet, dass** das Verriegelungselement (6) einen Stützabschnitt (62) zum Abstützen gegen den Klammerträger (2) und/oder einen Träger (110) einer die Klammervorrichtung (1) aufweisenden Behälterbehandlungsvorrichtung (100) aufweist, wobei der Stützabschnitt (62) bevorzugt elastisch ausgebildet ist.

11. Passive Klammervorrichtung (1) gemäß einem der vorstehenden Ansprüche, **dadurch gekennzeichnet, dass** das Verriegelungselement (6) einen Anschlagabschnitt (66) zum Anschlagen an die Klammerarme (3, 4), bevorzugt an Anschläge (36, 46) der Klammerarme (3, 4), aufweist, wobei bevorzugt der Anschlagabschnitt (66) versetzt zu einem Steuerabschnitt (64) des Verriegelungselements (6) angeordnet ist, wobei der Anschlagabschnitt (66) und der Steuerabschnitt (64) bevorzugt in einem vorgegebenen Abstand versetzt zueinander angeordnet sind, bevorzugt in Richtung der Klammermittelachse (10) versetzt zueinander angeordnet sind.

12. Behälterbehandlungsvorrichtung (100), umfassend einen Träger (110),
**dadurch gekennzeichnet, dass**
an den Träger eine passive Klammervorrichtung (1) gemäß einem der Ansprüche 1 bis 11 angeordnet ist.

## Claims

1. Passive clamp device (1) for holding a container (11) in a container handling apparatus (100), preferably holding a beverage container at a neck portion, comprising a first clamp arm (3), arranged on a clamp carrier (2) so as to be pivotable about a first pivot axis (30), having a holding portion (32) for resting on the container (11) to be held, a second clamp arm (4), arranged on a clamp carrier (2) so as to be pivotable about a second pivot axis (40), having a holding portion (42) for resting on the container (11) to be held, and a biasing member (5) for biasing the clamp arms (3, 4) in a closed position, wherein the clamp arms (3, 4) are configured and designed to be opened passively by the container being introduced, in order to receive a container (11), wherein
a locking element (6) is provided for locking the clamp arms (3, 4) in the closed position, wherein the locking element (6) is movable between a locking position and an unlocked position and is biased by way of an elastic spring element (7) in the locking position or the unlocked position,
**characterised in that**
the clamp arms (3, 4), the locking element (6) and the spring element (7) extend substantially in a plane (8) situated perpendicular to the pivot axes (30, 40), and that the spring element (7) is arranged on the biasing member (5).

2. Passive clamp device (1) according to claim 1, **characterised in that** the spring element (7) and the locking element (6) are formed integrally and/or the spring element (7) is a leaf spring, and/or the locking element (6) and/or the spring element (7) are arranged centrally with regard to a clamp central axis (10).

3. Passive clamp device (1) according to claim 1 or 2, **characterised in that** the spring element (7) is formed integrally with the biasing member (5).

4. Passive clamp device (1) according to any of the preceding claims, **characterised in that** the biasing member (5) and the clamp arms (3, 4) are formed integrally, wherein preferably the biasing member (5), the clamp arms (3, 4) and the spring element (7) are formed integrally, wherein especially preferably the biasing member (5), the clamp arms (3, 4), the spring element (7) and the locking element (6) are formed integrally, wherein the clamp arms (3, 4), the biasing member (5), the spring element (7) and/or locking element (6) is designed as a 3D printed part or injection moulding part, preferably made of a plastic, especially preferably from a technical plastic or a high-performance plastic, especially preferably of PEEK.

5. Passive clamp device (1) according to any of the preceding claims **characterised in that** the biasing member (5) is an elastic spring clip (50) extending in the plane (8) situated perpendicular to the pivot axes (30, 40), wherein preferably the clamp arms (3, 4) have respectively a connecting portion (34, 44) ending from the respective pivot axis (30, 40) on the side opposite to the holding portions (32, 42), wherein on an end, opposite to the pivot axis (30, 40), of the connecting portion (34, 44) is arranged an end (52, 54) of the biasing member (5), wherein the biasing member (5) extends preferably centrally between the connecting portions (34, 44), wherein the biasing member (5) extends preferably from the ends of the connecting portions (34, 44) in the direction of the pivot axes (30, 40).

6. Passive clamp device (1) according to any of the preceding claims, **characterised in that** the biasing member (5) has a plurality of curvature changes (56) in each case about a curvature axis (58) parallel to the pivot axis (30, 40).

7. Passive clamp device (1) according to any of the preceding claims, **characterised in that** the biasing member (5) is arranged with regard to the pivot axes (30, 40) on a side of the clamp arms (3, 4) opposed to the holding portions (32, 42), and/or the spring element (7) is arranged with regard to the pivot axes (30, 40) on a side of the clamping arms (3, 4) opposed to the holding portions (32, 42), and/or the locking element (6) is arranged with regard to the pivot axes (30, 40) on a side of the clamping arms (3, 4) opposed to the holding portions (32, 42).

8. Passive clamp device (1) according to any of the preceding claims, **characterised in that** the clamp arms (3, 4) have respectively a stop (36, 46) on which the locking element (6) impacts in the locking position.

9. Passive clamp device (1) according to any of the preceding claims, **characterised in that** the locking element (6) is movable in a direction parallel to the pivot axes (30, 40), wherein preferably the locking element (6) is guided by a guide (9) between the locking position and the unlocked position.

10. Passive clamp device (1) according to any of the preceding claims, **characterised in that** the locking element (6) has a supporting portion (62) for supporting it against the clamp carrier (2) and/or a carrier (110) of a container handling apparatus (100) having the clamp device (1), wherein the (62) is preferably designed to be elastic.

11. Passive clamp device (1) according to any of the preceding claims, **characterised in that** the locking elements (6) has a stop portion (66) for impacting on the clamp arms (3, 4), preferably on stops (36, 46) of the clamp arms (3, 4), wherein preferably the stop portion (66) is arranged offset to a control portion (64) of the locking element (6), wherein the stop portion (66) and the control portion (64) are preferably arranged at a predetermined distance offset to one another, preferably are arranged offset to one another in the direction of the clamp central axis (10).

12. Container handling apparatus (100) comprising a carrier (110),
**characterised in that**
on the carrier is arranged a passive clamp device (1) according to any of claims 1 to 11.

## Revendications

1. Dispositif de serrage passif (1) pour le maintien d'un récipient (11) dans un dispositif de traitement de récipient (100), de préférence pour le maintien d'un récipient de boisson sur une section de goulot, comprenant un premier bras de serrage (3) agencé de manière pivotante autour d'un premier axe de pivotement (30) sur un support de serrage (2) avec une section de maintien (32) pour l'appui contre le récipient (11) à maintenir, un second bras de serrage (4) agencé de manière pivotante autour d'un second axe de pivotement (40) sur le support de serrage (2) avec une section de maintien (42) pour l'appui contre le récipient (11) à maintenir et un élément de précontrainte (5) pour le précontrainte des bras de serrage (3, 4) dans une position fermée, dans lequel les bras de serrage (3,4) sont conçus et réalisés afin d'être ouverts pour la réception d'un récipient (11) passivement par une insertion du récipient, dans lequel
un élément de verrouillage (6) pour le verrouillage des bras de serrage (3, 4) est prévu dans la position fermée, dans lequel l'élément de verrouillage (6) est mobile entre une position de verrouillage et une position déverrouillée et est précontraint par le biais d'un élément de ressort (7) élastique dans la position de verrouillage ou la position déverrouillée,
**caractérisé en ce que**
les bras de serrage (3, 4), l'élément de verrouillage (6) et l'élément de ressort (7) s'étendent sensiblement dans un plan (8) se trouvant perpendiculaire aux axes de pivotement (30, 40), et que l'élément de ressort (7) est agencé sur l'élément de précontrainte (5).

2. Dispositif de serrage passif (1) selon la revendication 1, **caractérisé en ce que** l'élément de ressort (7) et l'élément de verrouillage (6) sont réalisés d'un seul tenant, et/ou l'élément de ressort (7) est un ressort à lames, et/ou l'élément de verrouillage (6) et/ou l'élément de ressort (7) sont agencés au milieu par rapport à un axe médian de serrage (10).

3. Dispositif de serrage passif (1) selon la revendication 1 ou 2, **caractérisé en ce que** l'élément de ressort (7) est réalisé d'un seul tenant avec l'élément de précontrainte (5).

4. Dispositif de serrage passif (1) selon l'une quelconque des revendications précédentes, **caractérisé en ce que** l'élément de précontrainte (5) et les bras de serrage (3, 4) sont réalisés d'un seul tenant, dans lequel de préférence, l'élément de précontrainte (5), les bras de serrage (3, 4) et l'élément de ressort (7) sont réalisés d'un seul tenant, dans lequel le plus préférentiellement, l'élément de précontrainte (5), les bras de serrage (3, 4), l'élément de ressort (7) et l'élément de verrouillage (6) sont réalisés d'un seul tenant, dans lequel les bras de serrage (3, 4), l'élément de précontrainte (5), l'élément de ressort (7) et/ou l'élément de verrouillage (6) est réalisé comme partie imprimée en 3D ou partie moulée par injection, de préférence en une matière plastique, le plus préférentiellement en une matière plastique technique ou une matière plastique à haute performance, de manière tout particulièrement préférée en PEEK.

5. Dispositif de serrage passif (1) selon l'une quelconque des revendications précédentes, **caractérisé en ce que** l'élément de précontrainte (5) est un étrier de ressort (50) élastique s'étendant dans le plan (8) se trouvant perpendiculaire aux axes de pivotement (30, 40), dans lequel de préférence, les bras de serrage (3, 4) présentent respectivement une section de liaison (34, 44) s'étendant de l'axe de pivotement (30, 40) respectif sur le côté opposé aux sections de maintien (32, 42), dans lequel une extrémité (52, 54) de l'élément de précontrainte (5) est agencée sur une extrémité opposée à l'axe de pivotement (30, 40) de la section de liaison (34, 44), dans lequel l'élément de précontrainte (5) s'étend de préférence au milieu entre les sections de liaison (34, 44), dans lequel l'élément de précontrainte (5) s'étend de préférence des extrémités des sections de liaison (34, 44) en direction des axes de pivotement (30, 40).

6. Dispositif de serrage passif (1) selon l'une quelconque des revendications précédentes, **caractérisé en ce que** l'élément de précontrainte (5) présente une pluralité de changements de courbure (56) respectivement autour d'un axe de courbure (58) parallèlement aux axes de pivotement (30, 40).

7. Dispositif de serrage passif (1) selon l'une quelconque des revendications précédentes, **caractérisé en ce que** l'élément de précontrainte (5) est agencé par référence aux axes de pivotement (30, 40) sur un côté opposé aux sections de maintien (32, 42) des bras de serrage (3, 4), et/ou l'élément de ressort (7) est agencé par référence aux axes de pivotement (30, 40) sur un côté opposé aux sections de maintien (32, 42) des bras de serrage (3, 4), et/ou l'élément de verrouillage (6) est agencé par référence aux axes de pivotement (30, 40) sur un côté opposé aux sections de maintien (32, 42) des bras de serrage (3, 4).

8. Dispositif de serrage passif (1) selon l'une quelconque des revendications précédentes, **caractérisé en ce que** les bras de serrage (3, 4) présentent respectivement une butée (36, 46), contre laquelle l'élément de verrouillage (6) bute dans la position de verrouillage.

9. Dispositif de serrage passif (1) selon l'une quelconque des revendications précédentes, **caractérisé en ce que** l'élément de verrouillage (6) est mobile dans un sens parallèle aux axes de pivotement (30, 40), dans lequel de préférence, l'élément de verrouillage (6) est guidé par un guidage (9) entre la position de verrouillage et la position déverrouillée.

10. Dispositif de serrage passif (1) selon l'une quelconque des revendications précédentes, **caractérisé en ce que** l'élément de verrouillage (6) présente une section d'appui (62) pour l'appui contre le support de serrage (2) et/ou un support (110) d'un dispositif de traitement de récipient (100) présentant le dispositif de serrage (1), dans lequel la section d'appui (62) est réalisée de préférence élastiquement.

11. Dispositif de serrage passif (1) selon l'une quelconque des revendications précédentes, **caractérisé en ce que** l'élément de verrouillage (6) présente une section de butée (66) pour la butée contre les bras de serrage (3, 4) de préférence contre des butées (36, 46) des bras de serrage (3,4), dans lequel de préférence, la section de butée (66) est agencée en déport d'une section de commande (64) de l'élément de verrouillage (6), dans lequel la section de butée (66) et la section de commande (64) sont agencées en déport l'une de l'autre de préférence à une distance prédéfinie, de préférence sont agencées en direction de l'axe médian de serrage (10) en déport l'une de l'autre.

12. Dispositif de traitement de récipient (100), comprenant un support (110), **caractérisé en ce que**
un dispositif de serrage (1) passif selon l'une quelconque des revendications 1 à 11 est agencé sur le support.
